# DEMANDE DE BREVET EUROPEEN

(11) **EP 1 403 160 A1**
(43) Date de publication de la demande: **31.03.2004**
(21) Numéro de dépôt: 03356138.2
(22) Date de dépôt: 24.09.2003
(51) Int. Cl.: B60T 11/236, B29C 45/14, B29C 45/00

(54) **Procédé de fabrication d'une pièce mécanique comportant une garniture d'étanchéité en matière plastique obtenue par surmoulage et pièce obtenue par ce procédé**

(30) Priorité: 24.09.2002 FR 0211759
(71) Demandeur: Freudenberg, 71000 Macon (FR)
(72) Inventeur: Gravier, Stéphane, 69007 Lyon (FR)
(74) Mandataire: Le Cacheux, Samuel L.R.

(57) **Abrégé**

- Le procédé de fabrication d'une pièce mécanique, comprenant un corps pourvu d'au moins une garniture en matière plastique, est caractérisé en ce qu'il consiste notamment à :
   - réaliser le corps de la pièce de manière qu'il comporte au moins un élément amovible définissant, en partie au moins, une empreinte pour le surmoulage de la garniture,
   - disposer le corps dans un moule (25) en tant que noyau central,
   - refermer le moule,
   - injecter la matière plastique pour mouler la garniture sur le corps,
   - ouvrir le moule,
   - extraire du moule la pièce mécanique comprenant le corps et sa garniture,
   - et retirer l'élément amovible du corps.
- Piston de freinage.

## Description

L'invention concerne le domaine technique de la mécanique et, plus particulièrement, le domaine de la fabrication et de la mise en oeuvre de pièces mécaniques qui doivent comporter, pour leur fonctionnement, des garnitures en matière plastique destinées, à assurer une fonction d'étanchéité.

Dans le domaine d'application préférée mais non exclusive de l'invention au circuit de freinage pour véhicule à moteur, il est connu de mettre en oeuvre, au sein d'un cylindre de commande hydraulique appelé "maître cylindre", un piston pourvu à l'extérieur d'une garniture d'étanchéité en matière plastique ou élastomère, tel que du caoutchouc. Cette garniture est, le plus souvent, montée à force ou en extension sur le piston, à l'intérieur d'une gorge périphérique externe.

Si les pistons ainsi assemblés, dans la mesure où ils ont passé avec succès les contrôles qualité, donnent généralement entière satisfaction quant à leur fonctionnement. Ce mode de fabrication présente, toutefois, un certain nombre d'inconvénients qui, sans être toujours rédhibitoires, pénalisent néanmoins les performances liées à la mise en oeuvre du piston et, dans une moindre mesure, celles liées à la fabrication des pistons.

En effet, la mise en place de la garniture en élastomère dans sa gorge d'accueil nécessite une déformation temporaire de la garniture qui peut entraîner un déchirement local, voire une rupture complète de celle-ci. Les déchirures locales peuvent : soit résulter d'une mauvaise manipulation ou d'un montage au moyen d'un outil défectueux, soit intervenir lorsque la limite de déformation élastique de la garniture est atteinte en cours de montage. Ainsi, les diverses opérations effectuées sont susceptibles de rendre défectueuse une garniture qui était, juste après sa fabrication, conforme aux critères de qualité exigés.

La déchirure complète, intervenant lors du processus de fabrication du piston, n'a d'autres conséquences que la mise au rebut de la garniture endommagée et son remplacement par une garniture intacte. Cette perte de garniture vient néanmoins grever le cours de la production des pistons.

En revanche, les déchirures locales, qui ne sont pas toujours visibles après montage, peuvent entraîner, de manière non prévisible, un dysfonctionnement du système hydraulique intégrant le piston sur lequel elles sont montées. Un tel dysfonctionnement peut alors avoir des répercussions sur la sécurité du véhicule équipé de ce circuit hydraulique ou, tout au moins, être la cause de dégradations mécaniques résultant du dysfonctionnement de l'embrayage.

Il apparaît donc le besoin de disposer d'une nouvelle méthode de fabrication des pistons ci-dessus permettant de réduire, autant que faire se peut, le risque de vice caché sur la garniture d'étanchéité équipant le piston.

Dans le même domaine technique des circuits hydrauliques de commande équipant les véhicules à moteur, il est également connu le besoin d'utiliser des pièces fixes, plus généralement appelés paliers, pour le guidage du piston d'un maître cylindre. Un tel palier présente une garniture en élastomère disposée à l'intérieur d'une gorge périphérique interne, en relation avec un alésage central à l'intérieur duquel se déplace, en translation, le piston du maître cylindre. Selon la technique actuelle, le palier de guidage est constitué par l'assemblage de plusieurs pièces, comprenant au moins une pièce principale présentant un alésage à l'intérieur duquel la garniture d'étanchéité et de guidage est placée, et une pièce secondaire destinée à venir se visser ou se clipper, par exemple à l'intérieur de l'alésage, pour immobiliser la garniture dans sa position définitive.

Un tel mode de réalisation impose une conception complexe du palier en plusieurs parties et requiert de nombreuses manipulations pour le montage et l'assemblage dudit palier. Or, il doit être noté que les manipulations, effectuées sur le palier et la garniture interne, entre sa fabrication et son montage, constituent autant de risques de salissure et de pollution de la garniture par des particules étrangères, susceptibles d'affecter le fonctionnement convenable du système intégrant le palier équipé de la garniture. De plus, compte tenu du nombre de pièces qui le compose, un tel palier présente un coût de fabrication relativement important.

Il apparaît donc également le besoin de disposer d'une nouvelle méthode de fabrication du palier ci-dessus permettant de réduire, autant que faire se peut, le nombre de pièces mises en oeuvre, ainsi que les risques de vice caché sur la garniture d'étanchéité équipant le palier.

Il doit être noté qu'un même problème se pose pour toutes les pièces mécaniques sur lesquelles il est nécessaire de mettre en oeuvre une garniture d'étanchéité en matière plastique ou en élastomère, dans la mesure où le montage de la garniture est susceptible d'endommager cette dernière ou de faire intervenir, pour son immobilisation notamment, des pièces supplémentaires.

L'invention vise donc à apporter une solution aux différents problèmes ci-dessus en proposant un nouveau procédé de fabrication d'une pièce mécanique comportant un corps pourvu d'au moins une garniture d'étanchéité en matière plastique.

Selon l'invention, ce procédé est caractérisé en ce qu'il comprend au moins les étapes suivantes :
- réaliser le corps de la pièce de manière qu'il comporte au moins un élément amovible définissant, en partie au moins, une empreinte pour le surmoulage de la garniture,
- disposer le corps dans un moule en tant que noyau central,
- refermer le moule,
- injecter la matière plastique pour mouler la garniture sur le corps,
- ouvrir le moule,
- extraire du moule la pièce mécanique comprenant le corps et sa garniture,
- et retirer l'élément amovible du corps.

Selon une caractéristique de l'invention, le procédé consiste à réaliser le corps et l'élément amovible de manière que l'élément amovible soit lié au corps par au moins une zone de moindre résistance et à retirer l'élément amovible en brisant cette zone de moindre résistance.

Selon une autre caractéristique de l'invention, le procédé consiste à réaliser le corps de la pièce en rapportant l'élément amovible sur le corps. De manière préférée, l'élément amovible est alors emboîté à force sur ou dans le corps de la pièce.

Selon encore une autre caractéristique de l'invention, l'élément amovible est réalisé de manière à présenter des zones de moindre résistance ou sécables permettant de casser l'élément amovible pour faciliter son retrait après moulage de la garniture.

Selon une autre caractéristique de l'invention, l'empreinte, définie par l'élément amovible, est amnagée pour assurer le moulage ou la conformation d'au moins une surface fonctionnelle de la garniture d'étanchéité et, de préférence mais non exclusivement, d'une lèvre d'étanchéité et/ou d'une surface d'étanchéité, dynamique ou non, destinée à coopérer avec une autre pièce mécanique que celle sur laquelle la garniture est surmoulée.

Il doit être noté que cette caractéristique pourra, de manière avantageuse, être associée à une réalisation de l'élément amovible sous une forme sécable. En effet, il sera ainsi possible d'obtenir une surface fonctionnelle, conformée par l'élément amovible, sans ligne de joint transversale ou radiale. La surface fonctionnelle ainsi obtenue sera quasiment dépourvue d'aspérité ou d'irrégularités et présentera donc de bonnes performances.

L'invention concerne également une pièce mécanique comprenant un corps destiné à recevoir au moins une garniture d'étanchéité en matière plastique. Selon l'invention, cette pièce mécanique est caractérisée en ce que le corps comprend au moins un élément amovible définissant, en partie au moins, une empreinte pour le surmoulage de la garniture en matière plastique.

Selon une caractéristique de l'invention, l'élément amovible est lié au corps par au moins une zone de moindre résistance sécable.

Selon une autre caractéristique de l'invention, l'élément amovible est rapporté ou emboîté à force sur ou dans le corps.

Selon une caractéristique de l'invention, l'élément amovible présente des zones de moindre résistance ou sécables destinées à faciliter le retrait de l'élément amovible.

Diverses autres caractéristiques de l'invention ressortent de la description faite ci-dessous en référence aux dessins annexés qui montrent, à titre d'exemples non limitatifs, des formes de réalisation et de mise en oeuvre de l'objet de l'invention.

La **fig. 1** est une coupe axiale d'un premier exemple de réalisation d'une pièce mécanique conforme à l'invention, dite palier de guidage, présentant deux garnitures surmoulées en matière plastique.

La **fig. 2** est une vue d'un palier de guidage selon l'art antérieur.

La **fig. 3** est une coupe axiale montrant le corps de la pièce mécanique selon la **fig. 1**, conforme à l'invention, sans garniture surmoulée et pourvue d'un élément amovible définissant, en partie, une empreinte pour le surmoulage d'une garniture à l'intérieur de ladite pièce.

La **fig. 4** est une perspective de la pièce selon la **fig. 3**.

Les **fig. 5** et **6** illustrent, en coupe axiale, différentes phases du procédé de fabrication de la pièce selon la **fig. 1**.

La **fig. 7** est une coupe axiale d'une pièce présentant une garniture externe selon une autre forme de réalisation de l'invention.

La **fig. 8** est une coupe axiale de la pièce mécanique semi-finie ou intermédiaire utilisée, conformément à l'invention, pour la fabrication de la pièce selon la **fig. 7.**

La **fig. 9** est une perspective de la pièce selon la **fig. 8**.

Les **fig. 10** et **11** illustrent différentes étapes du procédé de fabrication, conforme à l'invention, de la pièce mécanique selon la **fig. 7.**

Les **fig. 12** à **16** illustrent une autre forme de réalisation d'une pièce selon l'invention pour laquelle le corps est réalisé en plusieurs parties et l'élément amovible se trouve rapporté sur le corps.

Les **fig. 17** à **19** illustrent une autre forme de réalisation de la pièce, telle qu'illustrée aux **fig. 7** à **11,** selon laquelle l'élément amovible est également rapporté sur le corps de ladite pièce.

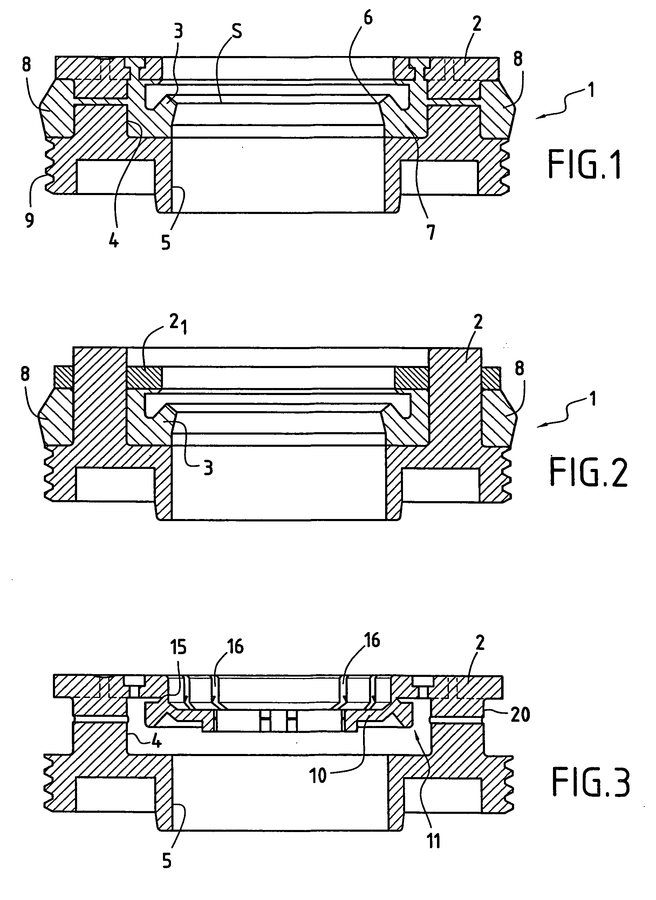

L'invention vise à proposer un procédé de fabrication d'une pièce mécanique, telle qu'illustré à la **fig. 1** et désignée dans son ensemble par la référence **1**, qui comprend un corps **2** pourvu d'une garniture **3** en matière plastique définissant au moins une surface de contact fonctionnelle **S** avec une autre pièce mécanique, non représentée, qui est mobile par rapport à la première pièce **1**.

Selon l'exemple illustré, la pièce **1** constitue un palier de guidage pour un piston de maître cylindre, non représenté, la garniture **3** est disposée à l'intérieur d'une gorge annulaire **4** aménagée en relation avec un alésage interne **5** de la pièce **1** à l'intérieur duquel se déplace le piston de maître cylindre. La garniture interne **3** présente alors une lèvre **6** qui définit la surface fonctionnelle **S** assurant un guidage du maître cylindre et une étanchéité dynamique autour de celui-ci. La garniture **3** comprend également une lèvre interne ou pied **7** qui assure une étanchéité statique au niveau du corps **2**. Compte tenu de sa fonction, le palier de guidage **1** présente également une garniture d'étanchéité extérieure **8**, destinée à assurer une étanchéité statique en relation avec le maître cylindre, non représenté, dans lequel le palier **1** est destiné à être adapté et fixé au moyen du filetage **9**.

La principale difficulté, liée à la fabrication de la pièce **1**, réside dans la mise en place de la garniture interne **3**. L'art antérieur préconisait, jusqu'à présent, comme le montre la **fig. 2,** de réaliser le corps **2** en plusieurs éléments, de manière à pouvoir, tout d'abord, introduire la garniture **3** dans un alésage, puis venir immobiliser celle-ci au moyen d'une pièce supplémentaire fermant ledit alésage pour délimiter une gorge de réception de ladite garniture **3**. Cependant, un tel mode de fabrication du corps **2** impose un nombre important de pièces et d'opérations pour réaliser la pièce définitive, telle qu'illustrée à la **fig. 2**.

L'invention propose, de manière fort avantageuse, de s'affranchir de ces différentes étapes de conception et de fabrication en surmoulant directement la garniture interne **3** à l'intérieur du corps **2**.

A cette fin et pour pouvoir définir de manière satisfaisante la forme particulière de la lèvre **6** d'étanchéité dynamique de la garniture **3**, l'invention préconise, dans une étape initiale ou préliminaire, de réaliser le corps de la pièce **2**, de manière que celui-ci comporte, comme cela ressort de la **fig. 3,** au moins un élément amovible **10** définissant une empreinte **11** pour le surmoulage de la garniture **3**. Selon l'exemple illustré, l'élément amovible **10** est aménagé en relation avec la gorge **4** destinée à recevoir la garniture **3.**

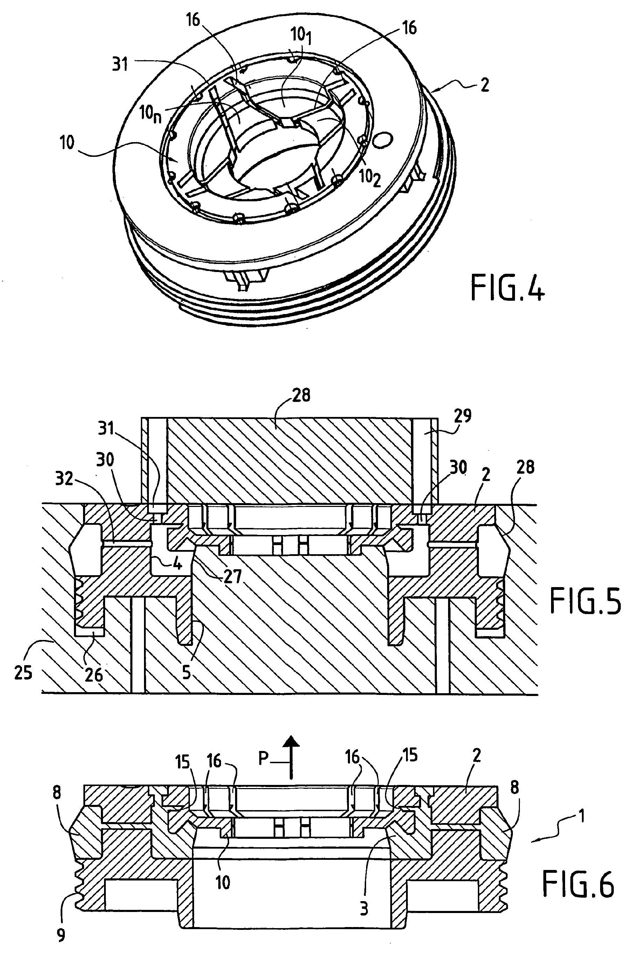

Le corps **2** et l'élément amovible **10** peuvent être réalisés de toutes manières et en toutes matières appropriées. Selon une forme de réalisation préférée mais non exclusive, le corps **2** et l'élément amovible **10** sont réalisés en matière plastique moulée et forment un ensemble monobloc. L'élément amovible **10** est alors lié au corps **2** par une zone de moindre résistance sécable **15** dont la fonction apparaîtra par la suite. De plus, compte tenu de la disposition de l'élément amovible **10** à l'intérieur du corps **2** en relation avec la gorge **4**, l'élément **10** est divisé en secteurs par des zones de moindre résistance **16**, tel qu'illustré à la **fig. 4** sur laquelle l'élément amovible **10** est grisé. La fonction de ces lignes de moindre résistance **16**, s'étendant depuis la zone de liaison **15** vers le centre de l'élément amovible **10**, ressortira clairement de la suite.

Selon l'exemple représenté, le corps **2** présente également une gorge extérieure **20**, à l'intérieur de laquelle la garniture **8** est surmoulée.

La fabrication de la pièce **1**, conformément à l'invention, s'effectue de la manière suivante.

Tout d'abord, le corps **2** est disposé en tant que noyau central dans le corps principal **25** d'un moule, comme le montre la **fig. 5**. Ce corps principal **25** présente, à cette fin, un logement d'accueil **26** du corps **2**. Le corps **25** comporte, également, une empreinte **27** complémentaire de celle **11** définie par l'élément amovible **10** pour assurer la conformation de la garniture interne **3**. Le corps **25** présente aussi une empreinte **28** pour la conformation de la garniture externe **8**.

Ensuite, une tête d'injection **28** est placée au-dessus du corps **2**, de manière à placer des canaux **29** d'amenée de la matière plastique, en relation avec des canaux d'injection **30** aménagés dans le corps **2**. Afin d'éviter tout problème de répartition de la matière plastique injectée, les canaux **30** sont aménagés en relation avec une gorge périphérique de répartition **31**. Après mise en place de la tête d'injection **28**, la matière plastique est envoyée dans les canaux **30** et vient remplir la cavité définie par la gorge **4**, l'élément amovible **10** et l'empreinte **27** du moule **25**, pour former la garniture **3**. De manière à permettre simultanément l'injection de la garniture externe **8**, le corps **2** présente également une série de canaux ou de passages **32** assurant une communication entre la gorge interne **4** et la gorge externe **20.** La matière plastique utilisée peut être de toute nature appropriée à la fonction des garnitures **3** et **8** et, de préférence mais non exclusivement, en élastomère, tel que du caoutchouc naturel ou synthétique.

Après injection de la matière plastique, la tête d'injection **28** est retirée et le corps **2** est éjecté à l'extérieur du moule **25**. Lors de cette opération, la plasticité de la garniture **8** est mise à profit pour permettre, par sa déformation, l'extraction du corps **2**.

A ce stade de la fabrication, le corps **2** comprend, comme le montre la **fig. 6**, les deux garnitures **3** et **8**, ainsi que l'élément amovible **10**. Ce dernier est alors détaché du corps **2** par l'exercice d'une pression dans le sens de la flèche **P** sur le centre de l'élément amovible **10**, de manière à rompre la zone de moindre résistance **15**. De plus, sous l'effet de cette pression **P**, la rupture des zones **16** divise l'élément amovible **10** en plusieurs parties qui peuvent être aisément extraites du corps **2**. Lors de la rupture de la zone **15,** la faculté de déformation de la garniture interne **3,** et plus particulièrement de sa lèvre **6**, est mise à profit pour permettre l'extraction de l'élément **10**.

Cette opération de retrait de l'élément amovible **10** permet donc d'obtenir la pièce définitive prête à l'emploi, conforme à l'invention telle qu'illustrée à la **fig. 1.**

Il apparaît que ce mode de fabrication et de conception de la pièce **2** permet de réaliser la garniture interne **3** au moyen d'un moule de conception très simple ne faisant pas intervenir de noyau ni de tiroir. Ainsi par le procédé proposé, il est possible de surmouler une garniture **3** de forme particulièrement élaborée, dans un alésage interne d'une pièce mécanique de petite dimension alors que cela n'était pas possible, selon l'art antérieur, sans le recours à un moule de conception particulièrement complexe et onéreux qui, dans la plupart des cas, n'était pas envisageable pour les pièces de petites dimensions.

De plus, il doit être remarqué que, selon l'exemple illustré, l'élément amovible **10** assure, par son empreinte, la conformation d'une partie au moins de la surface fonctionnelle de la garniture **3** et, en l'espèce, de la lèvre d'étanchéité dynamique **6**.

Par ailleurs, l'élément amovible **10** est, de préférence, réalisé de manière à ne présenter aucune aspérité ou aucun sillon au niveau de sa surface formant l'empreinte **11** de la lèvre **6**. Ainsi, la lèvre **10** sera moulée sans aspérité et, notamment, sans sillon ou ligne de joint radiale, comme cela aurait été le cas avec la technique selon l'art antérieur.

De plus, la mise en oeuvre des canaux d'injection **32** présents sur le corps **2** permet d'assurer une immobilisation positive en rotation des garnitures **3** et **8** sur ledit corps **2** par la présence de carottes de moulage qui subsistent au sein des canaux **30** après injection de la matière plastique. Ainsi, il est réalisé, de manière particulièrement avantageuse, un ancrage efficace des garnitures **3** et **8** qui favorise l'étanchéité statique entre lesdites garnitures et le corps **2**. Dans le même sens, le surmoulage des garnitures **3** et **8** assure une bonne adhérence de celles-ci sur le corps **2**, sans adjonction de produit adhésif. Enfin, il convient aussi de remarquer que le surmoulage des garnitures **3** et **8** sur le corps **2** évite de nombreuses manipulations de celles-ci et réduit au maximum les risques de pollution par des particules étrangères.

Par ailleurs, compte tenu de leur surmoulage, les garnitures **3** et **8** se trouvent, à l'intérieur de leurs gorges respectives, dans un état de relaxation sans contrainte résiduelle, telle que celle qui aurait pu résulter par un montage à force ou par déformation.

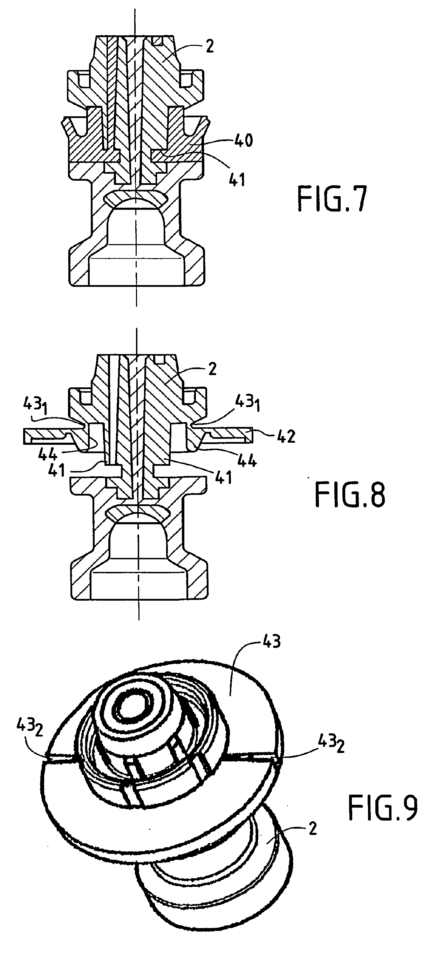

La technique proposée par l'invention peut également être mise en oeuvre pour la réalisation d'une garniture extérieure disposée autour du corps **2** de la pièce mécanique **1**. Ainsi, la **fig. 7** montre un exemple de pièce **1** destinée à constituer, par exemple, un piston de commande dans un maître cylindre de circuit d'embrayage. Le piston **1** présente une garniture **40** d'étanchéité dynamique disposée dans un alésage extérieur **41**.

Selon la technique proposée par l'invention, la garniture extérieure est surmoulée sur le piston. A cette fin, le corps **2**, destiné à recevoir la garniture **40**, présente, comme l'illustre la **fig. 8**, un élément amovible **42** aménagé en relation avec la gorge périphérique **41.** Cet élément amovible est lié au corps par une zone de moindre résistance **43**_{**1**} et divisé en deux secteurs par deux zones **43**_{**2**} de rupture sécables sensiblement radiales, comme cela ressort de la **fig. 9** sur laquelle l'élément **42** est grisé.

Bien entendu, l'élément amovible **42** présente une surface **44** qui définit, en partie, l'empreinte pour le surmoulage de la garniture **30**. La surface **44** sera, de préférence, conformée de manière à être continue pour ne présenter aucune aspérité ou aucun sillon susceptible de créer des défauts sur la garniture d'étanchéité dont elle assure le moulage.

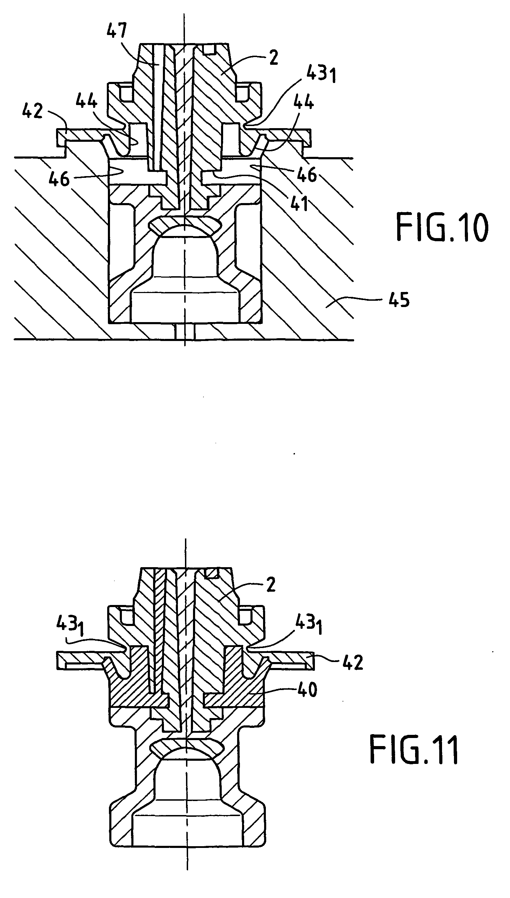

Pour l'injection de la garniture externe **30**, le corps **2** est disposé, en tant que noyau central, dans un moule **45** présentant une empreinte **46** complémentaire de celle **44** définie par l'élément amovible **42,** tel que cela est illustré à la **fig. 10.**

Ensuite, la matière plastique est injectée dans des canaux **47,** aménagés dans le corps **2** de la pièce pour remplir la cavité de moulage définie par la gorge **41,** le moule **45** et l'empreinte **44** présentée par l'élément amovible **42.**

Après injection de la matière plastique et retrait de la pièce hors du moule, la pièce se trouve dans un état intermédiaire dans lequel le corps **2** porte, à la fois, l'élément amovible **42** et la garniture **40,** comme le montre la **fig. 11.** Pour la séparation de l'élément amovible **42** et du corps **2,** un effort est exercé sur l'élément amovible **42,** de manière à le séparer du corps **2** en assurant une rupture de la zone de moindre résistance sécable, ainsi que celle des zones **43**_{**2**} le divisant en deux secteurs distincts. Le retrait de l'élément amovible **42** permet alors de disposer de la pièce mécanique, telle qu'illustrée à la **fig. 6** et prête à être insérée dans le système auquel elle est destinée.

Bien entendu, conformément à l'invention, le corps **2**, destiné à recevoir par surmoulage une ou plusieurs garnitures en matière plastique, de préférence en élastomère, pourrait comporter plusieurs éléments amovibles, tels que, par exemple mais non exclusivement, un élément amovible aménagé en relation avec une gorge extérieure pour définir une empreinte de surmoulage d'une garniture externe et un élément amovible disposé à l'intérieur dudit corps pour définir, en relation avec une gorge intérieure, une empreinte de surmoulage d'une garniture interne.

Dans le même sens, il pourrait être envisagé de mettre en oeuvre plusieurs éléments amovibles pour la conformation d'une même garniture.

De même, le procédé de fabrication a été décrit dans le cadre d'un moule mono-empreinte pour la prise en charge d'un seul corps de pièce. Bien entendu, conformément à l'invention, le surmoulage pourrait s'effectuer au moyen d'un moule multi-empreintes prenant en charge plusieurs corps de pièce.

Selon les exemples illustrés et décrits ci-dessus, l'élément amovible forme un ensemble monobloc avec le corps **2**. Toutefois, conformément à l'invention, l'élément amovible pourrait être rapporté sur le corps **2** de la pièce avant introduction du corps dans le moule. L'élément amovible serait alors fixé, de toute manière appropriée, sur le corps, de façon à être en partie au moins amovible. L'élément amovible pourrait ainsi être vissé, être encliqué sur le corps ou, encore, être réalisé en plusieurs parties coopérant les unes avec les autres pour être adaptées autour du corps **2**.

Dans la mesure où le surmoulage de la garniture est effectué dans une gorge, l'élément amovible serait alors, de préférence, adapté en relation avec cette gorge.

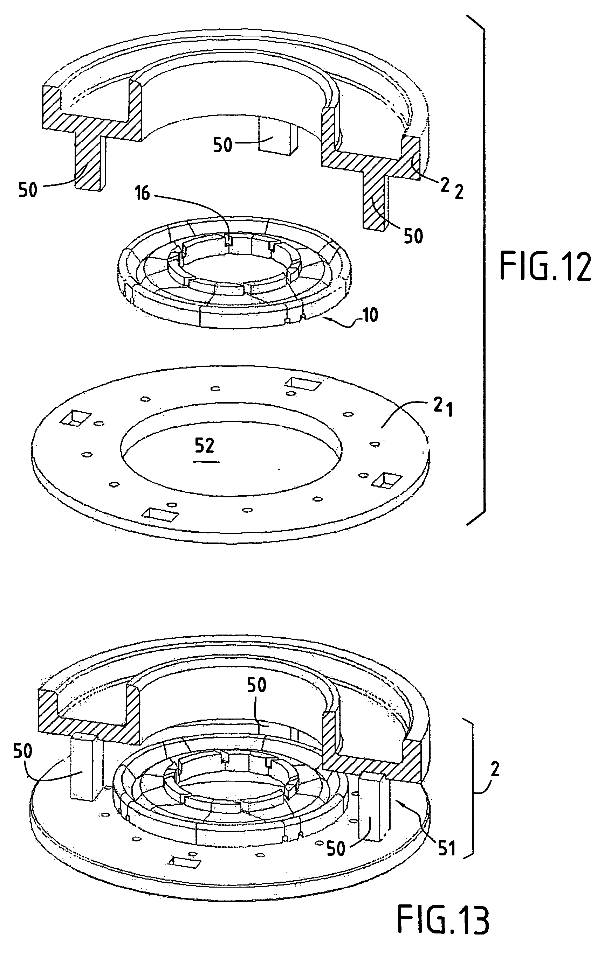

Ainsi, selon l'exemple illustré aux **fig. 12** à **16** de réalisation d'un palier de maître cylindre, le corps **2** est constitué de l'assemblage de deux éléments, à savoir une base **2**_{**1**} de forme annulaire sur laquelle est adaptée une couronne également annulaire **2**_{**2**}**.** La base **2**_{**1**} peut être réalisée en tout matériau approprié, tel qu'une matière plastique ou du métal, tandis que la couronne **2**_{**2**} est, de préférence, en matière plastique et se trouve surmoulée sur la base **2**_{**2**}**,** de manière à être liée à cette dernière par quatre pontets **50** dont seuls trois sont représentés aux figures.

Les pontets **50** permettent de définir une chambre annulaire **51**, ouverte vers l'intérieur et vers l'extérieur, pour le surmoulage de la garniture **3**.

Selon cet exemple, l'élément amovible **10** est constitué par un anneau en matière plastique **10** qui est emmanché à force dans un alésage central **52** de la base **2**_{**1**} avant le surmoulage ou la mise en place de la couronne **2**_{**2**}**.**

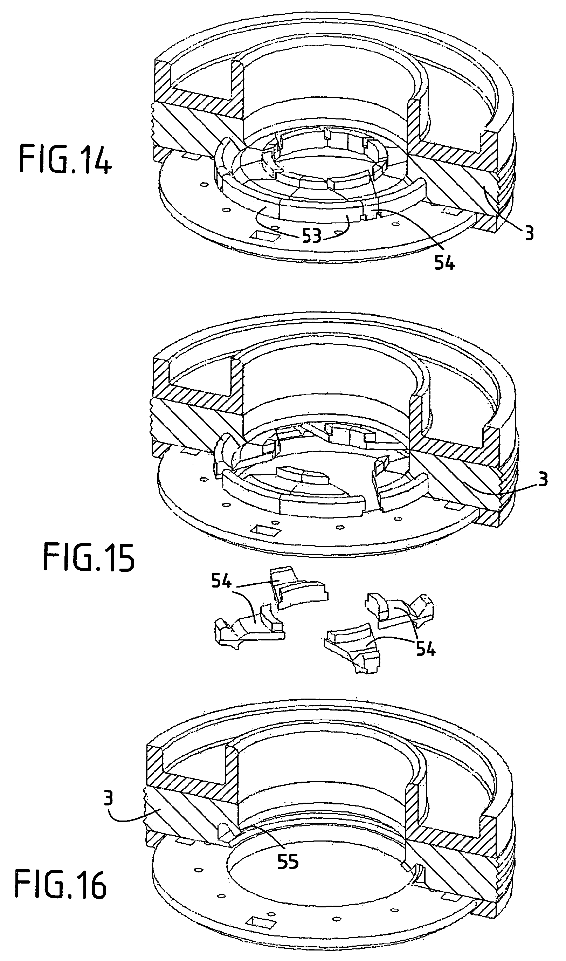

Le surmoulage de la garniture **3** intervient, conformément au procédé selon l'invention, comme décrit précédemment, de manière à obtenir la pièce telle qu'illustrée à la **fig. 14**.

A ce stade de la fabrication, la pièce amovible **10** est retirée.

A cet effet, la pièce **10** présente une série de lignes de moindre résistance **16** qui définissent des secteurs angulaires **53, 54** dont quatre **54,** placés à 90° les uns des autres, sont délimités par des lignes convergeant vers l'extérieur, de manière à permettre, après leur retrait, comme illustré **fig. 15**, l'extraction des autres secteurs **53**.

Ainsi, il est obtenu une pièce à garniture surmoulée, plus particulièrement illustrée **fig. 16,** la pièce amovible **10** ayant permis le moulage d'une lèvre d'étanchéité dynamique interne **55.**

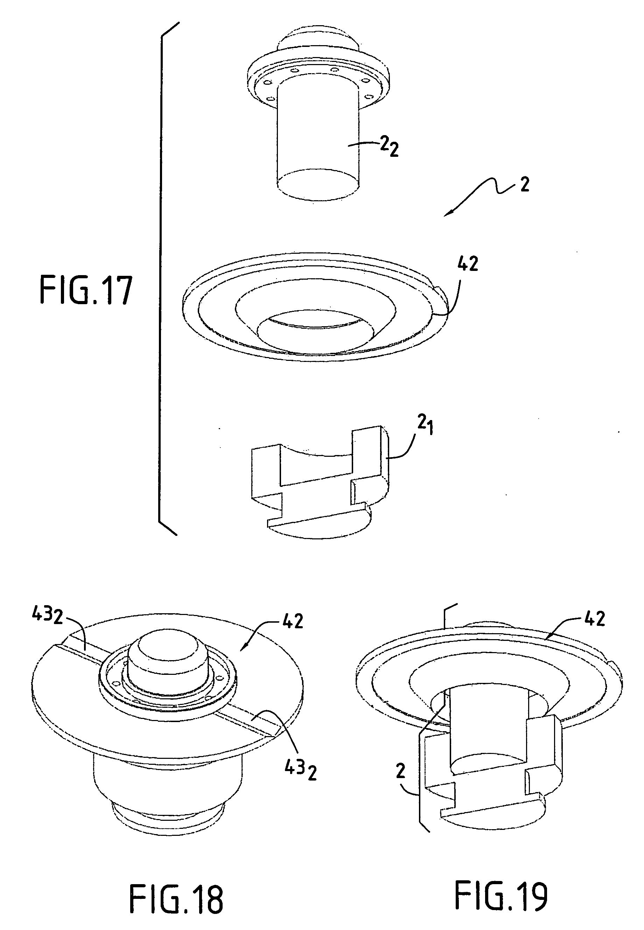

De la même manière, les **fig. 17** à **19** illustrent une forme particulière de réalisation du corps d'un piston de maître cylindre, tel que décrit en relation avec les **fig. 7** à **11.** Selon cette forme de réalisation, le corps **2** est constitué de deux parties **2**_{**1**} et **2**_{**2**}**,** comme le montre en éclaté la **fig. 17.**

La pièce amovible **42** est alors emboîtée à force sur l'une des parties **2**_{**1**} constitutive du corps **2** avant assemblage des deux parties entre elles. Ainsi, il est obtenu le corps **2** de la pièce équipée de l'élément amovible, comme le montrent les **fig. 18** et **19.** Il est à noter que la pièce amovible **42** présente deux lignes de moindre résistance **43**_{**2**} permettant son retrait, comme cela a été décrit précédemment.

Par ailleurs, l'invention a été présentée pour la réalisation de garnitures assurant une fonction de guidage et/ou d'étanchéité dans un système mécanique. Bien entendu, l'invention peut être mise en oeuvre pour la réalisation de pièces mécaniques ou non comportant une ou plusieurs garnitures ayant d'autres fonctions.

L'invention n'est pas limitée aux exemples décrits et représentés car diverses modifications peuvent y être apportées sans sortir de son cadre.

## Revendications

1. Pièce mécanique comprenant un corps **(2)** destiné à recevoir au moins une garniture d'étanchéité **(3, 40)** en matière plastique,
**caractérisée en ce que** le corps **(2)** comporte au moins un élément amovible **(10, 42)** définissant, en partie au moins, une empreinte **(11, 44)** pour le surmoulage de la garniture d'étanchéité **(3, 40)** en matière plastique.

2. Pièce mécanique selon la revendication 1, **caractérisée en ce que** l'empreinte **(11, 44)** est destinée au moulage d'une surface fonctionnelle d'étanchéité de la garniture **(3, 40)**.

3. Pièce mécanique selon la revendication 2, **caractérisée en ce que** l'empreinte **(11, 44)** est destinée au moulage d'une surface d'étanchéité dynamique de la garniture **(3, 40)**.

4. Pièce mécanique selon l'une des revendications 1 à 3, **caractérisée en ce que** l'élément amovible **(10, 42)** est lié au corps **(2)** par au moins une zone de moindre résistance sécable **(15, 43)**.

5. Pièce mécanique selon l'une des revendications 1 à 3, **caractérisée en ce que** l'élément amovible **(10, 42)** est rapporté sur le corps **(2)**.

6. Pièce mécanique selon l'une des revendications 1 à 5, **caractérisée en ce que** le corps **(2)** présente une cavité **(4)** destinée au surmoulage de la garniture **(3)** à l'intérieur du corps et **en ce que** l'élément amovible **(10)** est aménagé en relation avec cette cavité.

7. Pièce mécanique selon la revendication 6, **caractérisée en ce que** l'élément amovible **(10)** est disposé, en partie au moins, à l'intérieur de la cavité **(4)**.

8. Pièce mécanique selon l'une des revendications 1 à 5, **caractérisée en ce que** le corps **(2)** présente une gorge périphérique **(41)** destinée au surmoulage de la garniture **(40)** autour du corps **(2)** et **en ce que** l'élément amovible **(42)** est aménagé ou adapté en relation avec cette gorge **(41)**.

9. Pièce mécanique selon l'une des revendications 1 à 8, **caractérisée en ce que** l'élément amovible **(10, 42)** comprend au moins deux parties liées l'une à l'autre par une zone (**16**, **43**_{**2**}**)** de moindre résistance.

10. Pièce mécanique selon l'une des revendications 1 à 9, **caractérisée en ce que** le corps **(2)** présente au moins un canal **(30, 47)** pour l'injection de la matière plastique constitutive de la garniture **(3, 40).**

11. Pièce mécanique selon l'une des revendications 1 à 10, **caractérisée en ce qu'**elle est réalisée en matière plastique.

12. Pièce mécanique selon l'une des revendications 1 à 11, **caractérisée en ce que** le corps **(2)** et l'élément amovible **(10, 42)** forment un ensemble monobloc.

13. Procédé de fabrication d'une pièce mécanique comprenant un corps **(2)** pourvu d'au moins une garniture d'étanchéité **(3, 40)** en matière plastique, **caractérisé en ce qu'**il comprend les étapes suivantes :
- réaliser le corps **(2)** de la pièce de manière qu'il comporte au moins un élément amovible **(10, 42)** définissant, en partie au moins, une empreinte **(11, 44)** pour le surmoulage de la garniture **(3),**
- disposer le corps **(2)** dans un moule **(25, 45)** en tant que noyau central,
- refermer le moule,
- injecter la matière plastique pour mouler la garniture **(3, 40)** sur le corps,
- ouvrir le moule,
- extraire du moule la pièce mécanique comprenant le corps **(2)** et sa garniture **(3, 40)**,
- et retirer l'élément amovible **(10, 42)** du corps.

14. Procédé de fabrication selon la revendication 13, **caractérisé en ce qu'**il consiste à assurer le moulage d'une surface fonctionnelle d'étanchéité de la garniture **(9, 40)** au moyen de l'empreinte **(11, 44)** définie par l'élément amovible.

15. Procédé de fabrication selon la revendication 14, **caractérisé en ce qu'**il consiste à assurer le moulage d'une surface d'étanchéité dynamique de la garniture **(3, 40)** au moyen de l'empreinte **(11, 44)**.

16. Procédé de fabrication selon l'une des revendications 13 à 15, **caractérisé en ce qu'**il consiste à réaliser le corps **(2)** et l'élément amovible **(10, 32)**, de manière que l'élément amovible soit lié au corps **(2)** par au moins une zone de moindre résistance (**15, 43**_{**1**}) et à retirer l'élément amovible **(10, 42)** en brisant cette zone de moindre résistance.

17. Procédé de fabrication selon l'une des revendications 13 à 15, **caractérisé en ce qu'**il consiste à rapporter l'élément amovible **(10, 42)** sur le corps **(2)** avant introduction dudit corps **(2)** dans le moule **(25, 45)**.

18. Procédé de fabrication selon l'une des revendications 13 à 17, **caractérisé en ce qu'**il consiste à :
- réaliser, dans le corps **(2)** de la pièce, une cavité **(4)** pour le surmoulage de la garniture **(3)**,
- aménager ou adapter l'élément amovible **(10)** en relation avec cette cavité,
- et surmouler la garniture **(3)** à l'intérieur de cette cavité.

19. Procédé de fabrication selon l'une des revendication 13 à 17, **caractérisé en ce qu'**il consiste à :
- réaliser à la périphérie du corps **(2)**, une gorge **(41)** pour le surmoulage de la garniture **(40),**
- aménager ou adapter l'élément amovible **(42)** en relation avec cette gorge,
- et surmouler la garniture autour du corps **(2)**.

20. Procédé de fabrication selon l'une des revendications 13 à 19, **caractérisé en ce qu'**il consiste à réaliser au moins un canal d'injection **(30, 47)** dans le corps de la pièce.

21. Procédé de fabrication selon l'une des revendications 13 à 20, **caractérisé en ce qu'**il consiste à diviser l'élément amovible **(10, 42)** en au moins deux parties reliées par au moins une zone de moindre résistance **(16**, **43**_{**2**}**).**

22. Procédé de fabrication selon l'une des revendications 13 à 21, **caractérisé en ce qu'**il consiste à réaliser le corps **(2)** de la pièce en matière plastique injectée.

23. Procédé de fabrication selon l'une des revendications 13 à 18, **caractérisé en ce qu'**il consiste à réaliser la garniture **(3, 40)** en élastomère.

24. Pièce mécanique obtenue par le procédé de fabrication selon l'une des revendications 13 à 23.

25. Pièce mécanique selon la revendication 24, **caractérisée en ce qu'**elle comprend au moins une garniture surmoulée **(3, 40)** en élastomère.
